# EUROPEAN PATENT APPLICATION

(11) **EP 3 822 110 A1**
(43) Date of publication of application: **19.05.2021**
(21) Application number: 19020646.6
(22) Date of filing: 15.11.2019
(51) Int. Cl.: B60L 53/18, B60L 53/31, B65H 75/44

(54) **CHARGE CABLE MANAGEMENT SYSTEM**

(71) Applicant: EVBox Intelligence B.V., 1076 EE Amsterdam (NL)
(72) Inventor: The designation of the inventor has not yet been filed
(74) Representative: Kosti, Vasiliki

(57) **Abstract**

A system and method are provided for controlling retraction of a charging cable of a charge cable management system for charging an electric vehicle. The retraction is only allowed after certain conditions are met. These conditions correspond to the end of a charging session, and may relate to determining a connection of a charge plug on a cable used for the charging session with a charge plug dock of the cable management system, determining a release of a charge plug on a cable used for the charging session from a vehicle inlet socket of the vehicle that was being charged, determining a retraction state of the cable, receiving a user input related to ending the charging session or any combination thereof.

## Description

### FIELD OF THE INVENTION

The present invention relates to a charge cable management system.

### BACKGROUND

EP2666216 discloses an arrangement for locking an automatic reeling mechanism of a charging cable for an electric vehicle. The arrangement comprises an automatic reeling mechanism, which is designed for automatically reeling a charging cable for an electric vehicle, which charging cable can be drawn out of the automatic reeling mechanism by overcoming a retraction force which acts on a plug located at the end of the charging cable via the charging cable.

The major problem encountered in the arrangement described in EP2666216 is that the operator cannot determine the precise moment in which the charging of the battery is completed and therefore act on the plug.

The arrangement of EP2666216 comprises a control unit designed to detect whether the plug is inserted in the vehicle or is no longer being touched by an operator, and to reduce the retraction force or to decouple the retraction force from the plug as soon as the plug of the charging cable is inserted or is no longer being touched by the operator.

An additional problem in the arrangement of EP2666216, is that the retraction force is not applied if the user withdraws the plug from the vehicle, but then lays the plug on the ground. As the system does not know what to do when the operator does not touch it, the plug will lay on the ground forever. Furthermore, the system will detect that an operator is touching the plug when this is on the ground and a retraction force will be applied as soon as a user touches it which may unpleasantly surprise the operator.

### SUMMARY

The objective of the present invention is to provide a charge cable management system which is addressing at least the problems enumerated above.
In what follows, the term "electric vehicle" designates any vehicle which is powered entirely or partially by electric power and is able to be charged either by Alternating Current (AC) or Direct Current (DC).

In a first embodiment the charge cable management system for charging an electric vehicle comprising a battery, comprises a charging cable, a cable storage for housing the cable, a tensioning module for applying a tensioning force on the cable to retract the cable into the cable storage, a brake module arranged to apply a brake force on the cable to block retraction of the cable into the cable storage in an engaged position, a brake release module arranged to disengage the brake acting on the cable and is characterised in that it further comprises an end-of-charging detection module arranged to determine whether a charging session for charging the battery has come to an end and arranged to provide an end-of-charging signal and a controller arranged to receive said signal, to control the brake release module in accordance with said signal provided by the end-of-charging detection module such that the brake release module is activated to release the brake from the cable when the charging session for charging the battery has come to an end.

In the above system the brake module may comprise an urging element for urging the brake module in the engaging position.

Additionally, the controller may comprise a timer, which is activated upon receiving the end-of-charging signal provided by the end-of-charging detection module, and wherein the controller is arranged to activate the brake release module to release the brake from the cable after a certain time period.

According to another embodiment of the present invention, the charging detection module is arranged to receive a user input related to the end of a charging session and provide the end-of-charging detection signal based on the received user input.

The above system may further comprise a detector for determining a retraction state of the cable and to send a retraction state signal corresponding to the determined retraction state of the cable. Here, the term "detector" is a generic term as it may designate the existence of one or more detectors, as follows:
Said "detector" may detect the retraction state of the cable, which is at least one of the following:
   - the retraction speed of the cable;
   - the tension on the cable;
   - whether the cable is substantially retracted;
   - the location of a pulley on which the cable is provided;
   - the length of the cable inside the cable storage;
   - the length of the cable outside the cable storage.

In the same embodiment the controller may be arranged to control the brake release module in accordance with the retraction state of the cable.

Optionally, the charge cable management system may further comprise a power failure device arranged to deactivate the brake release module in the event of a power failure.

The tensioning module of the above system may comprise a pulley on which part of the cable is wound and an urging device for providing a tensioning force on the pulley.

According to another aspect of the present invention, it is described a method for controlling retraction of the charging cable of a charge cable management system for charging an electric vehicle comprising a battery, the method comprising the steps of applying a tensioning force on the cable to retract the cable into the cable storage, applying a brake force on the cable during a charging session to prevent retraction of the cable into the cable storage and is characterised in that it further comprises the steps of determining that the charging session has come to an end, generating and end-of-charging signal, sending the end-of-charging signal to a controller and releasing the brake force on the cable when said signal is received, such that the cable is retracted into the cable storage.

According to another embodiment of said method, determining that the charging session has come to an end comprises at least one of determining a connection of a plug of a cable used for the charging session with a charge plug dock of the cable management system, determining the release of a plug of a cable used for the charging session from a vehicle inlet socket of the vehicle that was being charged, determining the retraction state of the cable or receiving a user input related to end-of-charging moment.

According to a yet another embodiment of said method, determining that the charging session has come to an end comprises at least one of determining the release of a plug of the cable from a vehicle inlet socket of the vehicle that was being charged, determining a connection of a plug of the cable with a charge plug dock of the cable management system, determining that the retraction of the cable is not fully completed.

Finally, according to another embodiment of said method, determining that the charging session has come to an end activates a timer and after a predetermined time the brake force on the cable is released.

### FIGURES

Figures 1A, 1B and 1C show a charge cable management system in different phases
Figure 1D depicts a situation wherein a charging session has come to an end
Figures 2A and 2B show a brake module disengaged and engaging the cable
Figure 3A is a block diagram of the method for operating a charge cable management system.

### DETAILED DESCRIPTION OF THE FIGURES

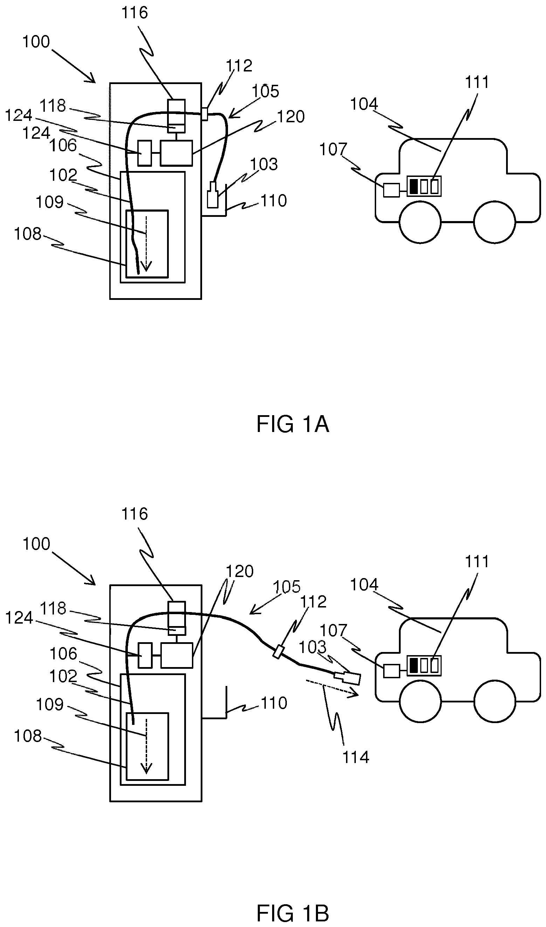

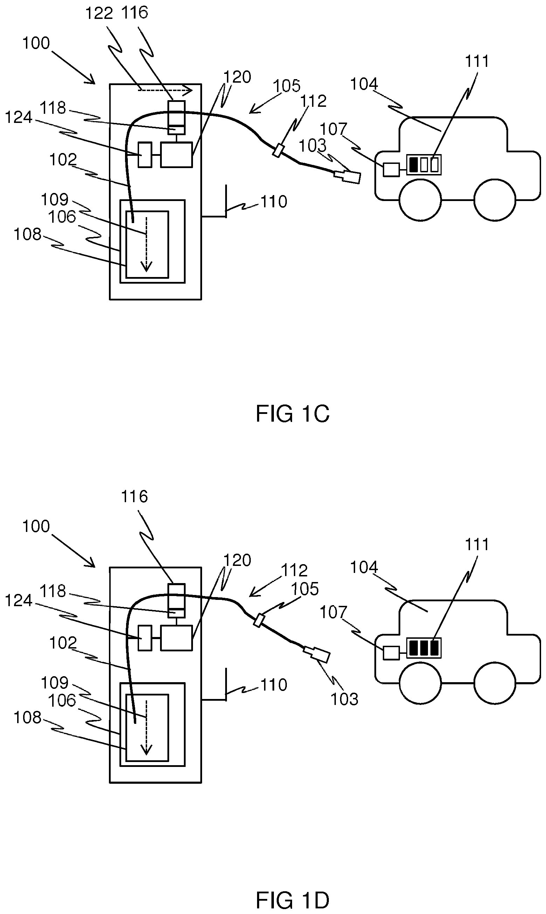

Figs. 1A, 1B and 1C show a charge cable management system 100 for providing a cable 102 for charging an electric vehicle 104 comprising a battery 111. Said vehicle can be a scooter, a motorcycle, a car, a bus or any other electric or hybrid vehicle with a rechargeable battery. The cable 102 is provided at least partially inside a cable storage or housing 106 for housing the cable 102. The charge cable management system 100 further comprises a tensioning module 108. The tensioning module 108 is arranged for applying a tensioning force 109 on the cable 102, which tensioning force 109 is arranged to retract the cable 102 into the cable storage 106.

In embodiments of the cable management system 100, the tensioning module 108 may comprise one or more pulleys on which part of the cable may be wound. An urging device may for example comprise pulleys and springs which exert a force, preferably a rotational force, arranged to wind the cable onto a pulley. As such, the urging device may be arranged to urge and/or wind the cable onto the pulley, and/or may the urging device act as a retraction device arranged for retracting the cable at least partially into the cable storage 106.

The tensioning module 108 may be provided anywhere in the cable management system 100, for example at least partially inside the cable storage 106, and/or at least partially outside the cable storage 106.

Alternatively or additionally, one or more of the pulleys may be arranged to translate within the cable management system 100, and one or more urging devices may be employed for providing a force in the translation direction of a pulley for providing the tensioning force on the cable 102.

In embodiments of the cable management system 100, the urging device may be arranged as one or more springs. Additionally, or alternatively, one or more masses may be used, wherein gravity pulling on the masses results in the required tensioning force on the charging cable 102. As a further additional or alternative option, one or more actuators may be employed for providing the tensioning force, such as pneumatic actuators, hydraulic actuators, magnetic actuators, electrical actuators such as an electric motor, any other type of actuator arranged to provide a tensioning force, or any combination thereof.

At a proximal end 105 of the cable 102, a plug 103 is arranged to be inserted in to a vehicle inlet socket 107, for example comprised by the electric vehicle 104. When the plug 103 is not inserted into vehicle inlet socket 107, it may be inserted into an optional charge plug dock 110 comprised within or outside the charge cable management system 100.

The cable 102 may comprise a plurality of cores and jackets. For example, some cores may be present for a connecting the battery 111 of the vehicle 104 to a power grid. As an option, one or more cores may be arranged for transfer of one or more data signals between the vehicle 104 and the cable management system 100.

In the preferred embodiment of the cable management system 100 as shown in Fig. 1A, a certain length of the cable 102 at the proximal end 112 is provided outside the cable management system 100. Further retraction of the cable 102 will result in a decrease of the length of the cable 102 extending outside the dispending system 100 at the proximal end 112. As an option, the cable 102 is provided with an end stop 105 which prevents further retraction of the cable 102 into the cable storage 106. The cable storage 106 may be a separate compartment within the cable management system 100, or may be formed by at least part of the cable management system 100 itself.

In the situation as depicted in Fig. 1A, the plug 103 is inserted into the charge plug dock 110. Hence, no charging of the electric vehicle 104 takes place via the cable 102. In Fig. 1B, a pulling force 114 is exerted on the cable, for example at the plug 103, arranged to pull the cable 102 out of the cable management system 100. Pulling force 114 is exerted for example by a user wanting to plug the plug 103 into vehicle inlet socket 107.

If the pulling force 114 exceeds the retraction force 109, the cable 102 is pulled out of the cable management system 100 and thus the part of the cable 102 extending out of the cable management system 100 increases at the proximal end 112.

Fig. 1C shows a situation wherein pulling force 114 is removed (and is thus not shown anymore), or at least decreased such that the retraction force 109 exceeds any pulling force 114. To prevent the cable 102 from being retracted back into the cable management system 100, a brake module 116 is provided arranged to engage with the cable 102 to block retraction of the cable 102 into the cable storage 106. The situation of Fig. 1C might for example occur when a user pulling the cable 102 from the cable management system 100 for some reason stops pulling on the cable 102.

When engaged, the brake module 116 exerts a braking force 122 to the cable 102, which braking force 122 substantially exceeds the retraction force 109 and thus counteracts it to prevent retraction of the cable 102. The braking force 122 may comprise a plurality of forces each with its own force vector. The force vectors may be pointing in different directions. For example, may a first part of the braking force 122 be applied substantially perpendicular to the cable 102. This first part of the braking force 122 may push the cable 102 against a surface, for example part of a wheel. This pushing may then result in a friction force between the cable and the surface as a second part of the braking force 122, with a force vector oriented substantially opposite to a retraction force.

For disengaging the brake module 116, the cable management system 100 comprises a brake release module 118 arranged to disengage the brake module 116 from the cable 102.

For controlling when to disengage the brake module 116 with the brake release module 118, the cable management system 100 comprises a controller 120 arranged to control the brake release module 118 in accordance with a detection signal provided by a charging detection module 124 such that the brake release module 118 is activated to release the brake 116 from the cable 102 if it is determined that the charging session for charging the battery has come to an end.

The charging detection module 124 is arranged to determine whether a charging session for charging the battery 111 has come to an end and is arranged to provide the detection signal to the controller 120.

Fig. 1D depicts a situation wherein a charging session has come to an end, implying that the state of charge of the battery 111 of the electric vehicle 104 has increased by virtue of electrical energy flowing into the battery 111 via the cable 102 supplied by the charge cable management system 100. For a charging session to be completed, it is not necessary for the state of charge of the battery 111 to be completely full.

Alternatively, or additionally, a situation may be envisioned wherein the state of charge of the battery 111 is decreased by virtue of a flow of electrical energy from the battery 111 through the cable 102 back into a power grid. A charging session coming to an end in such a case refers to a situation wherein a desired amount of electrical energy has been transferred out of the battery 111 to the power grid via the cable 102.

In the situation as depicted in Fig. 1D, the brake release module 118 has disengaged the brake module 116 from the cable 102. With the brake release module 118 disengaged, the braking force 122 is not present anymore. This causes the net sum of forces on the cable 102 to become dominated by the retraction force 109, and the cable 102 will be retracted into the cable storage 106 of the cable management system 100. This retraction will result in a smaller cable length extending out of the cable management system 100.

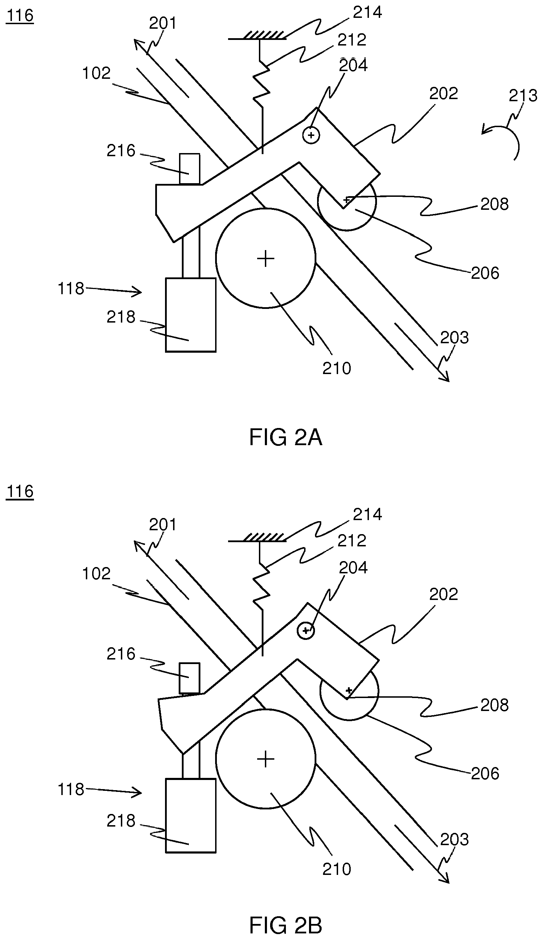

Figs. 2A and 2B show an embodiment of a brake module 116, wherein the brake module 116 is shown respectively disengaged and engaging the cable 102. The cable 102 being engaged implies that a brake force may be applied to the cable 102 by the brake module 116. Arrow 201 indicates a retraction direction for the cable 102, and arrow 203 indicates a pulling out direction for the cable 102.

The brake module 116 comprises a lever 202 arranged to hinge around a lever hinging point 204. Attached to the lever 202 is a one way bearing 206 arranged to rotate around a bearing rotation point 208 in a rotation direction indicated with reference 213. The one way bearing 206 substantially does not rotate around the bearing rotation point 208 in the rotation direction opposite to rotation 213.

The brake module 116 further comprises a guiding wheel 210 arranged to guide the cable 102 retracting into the cable management system 100 or being pulled out of the system 100.

The guiding wheel 210 is in the embodiment of the brake module 116 as shown in Figs. 2A and 2B arranged as a flanged wheel. As such, lateral movement of the cable 102 may be guided as well, wherein the lateral movement relates to movement in and out of the paper when looking at Figs. 2A and 2B.

Connected to lever 202 is an urging member 212, which is also connected to a fixed point 214 such that a force is provided by the urging member 212 urging the lever 202 to rotate clockwise in Figs. 2A and 2B. This urging force causes the cable 102 to be clamped between the guiding wheel 210 and the one way bearing 206 in the situation of Fig. 2A, where the brake module 116 is activated.

The urging member 212 may in different embodiments be arranged as a compression spring, or as a tension spring. Additionally, in different embodiments, the urging member may be provided at the left side of the lever hinging point 204 or on the right side of the lever hinging point 204. Any combination of the type of urging member 212 and attachment position of the urging member 212 on the lever 202 is envisioned.

For disengaging the brake module 116, a brake release module 118 is provided. In the embodiment of Figs. 2A and 2B, the brake release module 118 comprises an engagement member 216. The engagement member 216 is actuated by a solenoid module 218 as an actuator. By activating the solenoid module 218, the engagement member 216 is pulled down, resulting in the lever 202 to rotate counterclockwise and the one way bearing 206 to disengage the cable 102, as shown in Fig. 2B. This disengagement results in a release of braking force on the cable 102, allowing the cable 102 to be retracted in the retraction direction 201.

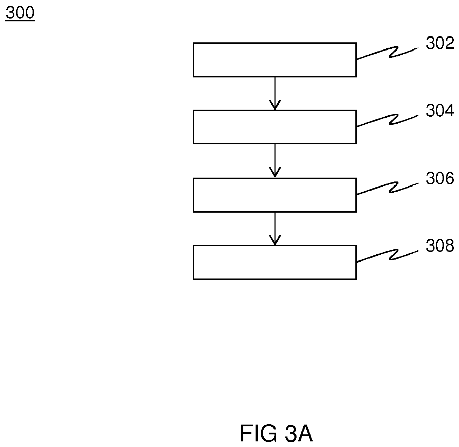

Fig. 3A depicts a method for operating a charge cable management system, comprising a first step of applying a retraction force on the cable 302, followed by a second step of applying a brake force on the cable 304 during a charging session to prevent retraction of the cable into the charging station. When it is detected that the charging session has come to an end at a third step 306, in a fourth step 308 the brake force is released such that the cable may be retracted into a cable management system.

In use of an embodiment of the cable management system 100, the following situation may take place. If the cable 102 is not in use, the cable management system 100 is in a waiting mode, waiting for a user to want to use the cable 102.

At some point, the user will provide a pulling force on the cable 102 in order to pull out sufficient length of cable 102 to be able to plug the plug 103 of the cable 102 into the vehicle inlet socket 107 of the vehicle 104. Next, the user will plug the plug 103 into the vehicle inlet socket 107 and a charging session may commence.

Before the user is allowed to pull the cable 102 from the cable management system 100, some authorization may be required to prevent abuse of the cable management system 100. For example, the plug 103 may be locked to the charge plug dock 110, and only after a correct user identification may the plug 103 be unlocked from the charge plug dock 110.

During the time between the user first pulling on the cable 102, and the plug 103 being inserted in the vehicle inlet socket 107, the brake module 116 prevents the retraction force 109 of the tensioning module 108 from retracting the cable 102 back into the system 100.

For charging the car 107, the plug 103 is now inserted into the vehicle inlet socket 107 such that electrical energy may be transferred to the car 107, starting the charging session. In different embodiments, the starting of charging session may correspond to the point in time in which the user is correctly identified, or the plug 103 is removed from the charge plug dock 110, or the plug 103 is inserted into the vehicle inlet socket 107, or the electrical energy transfer has started. Any combination of any of these events and/or any other relevant event may also be used for determining the start of the charging session.

At some next point in time, the charging session will have come to an end. After the charging session has come to an end, the cable 102 has to be retracted back into the system 100. For retracting the cable 102, the tensioning force 109 applied by the tensioning module 108 may have to be used, as it will often not be possible for the user to supply the cable 102 back into the system 100 properly.

To allow the tensioning module 108 to retract the cable 102, the brake module 116 has to be disengaged from the cable 102 by the brake release module 118. For controlling when to activate the brake release module 118 to disengage the brake module 116, controller 120 is used.

For determining whether the charging session has come to an end, and thus when to activate the brake release module 118, the charging detection module 124 may be used. After starting the charging session, the charging detection module 124 monitors one or more parameters to determine when the charging session has come to an end. After this determining, the charging detection module 124 can provide the detection signal to the controller, such that the controller 120 can activate the brake release module 118.

The one or more parameters to determine when the charging session has come to an end may relate to a user input relating to the user indicating the end of the charging session.

The one or more parameters to determine when the charging session has come to an end may further relate to a disconnection of a data connection between the cable management system 100 and the vehicle 104 via the cable 102. Such a data connection may be used for communication between a charging system comprised by vehicle 104 and a charging system comprised by the cable management system 100, which communication may for example relate to the type of vehicle, battery, charging system, a maximum charging load, any other relevant data, or any combination thereof.

The part of the cable 102 used for the data transfer may be a different part than the part of the cable 102 used for the transfer of electrical energy; for example, different conductive cores may be comprised within the cable 102. Alternatively, the part of the cable 102 used for the transfer of electrical energy may also be used for the data transfer. The data transfer may be monitored by the charging detection module 124. In het another alternative, data is transferred wirelessly.

The charging detection module 124 may thus be arranged to be connected to the data connection such that it may at least partially determine from the data connection if the charging session has come to end. For example, the fact that the data connection is interrupted, for example for a certain amount of time, may indicate to the charging detection module 124 that the charging session has come to an end. Alternatively, or additionally, signal data comprised by the data connection may relate to the end of a session. In such a case, the charging detection module 124 may be arranged to receive the signal data and detect or determine whether it relates to the end of a session.

The charging detection module 124 may as an option be arranged to determine whether the plug 103 of the cable 102 has been inserted into the charge plug dock 110. This determination may indicate that the charging session has ended.

While the cable 102 is being retracted, at some point this retraction has to end to prevent the cable 102 from being retracted too far. To prevent unwanted retraction, a physical stop 105 as a mechanism to prevent too far retraction of the cable 102 within the housing may be used. Alternatively, or additionally, a cable detector may be provided with means for determining a retraction state of the cable and to send a retraction state signal corresponding to the determined retraction state of the cable. As an example, the cable detector may be arranged as a pulley on which part of the cable may be provided. If the pulley is moving between a first position and a second position, one of these positions may correspond to a position in which the cable has been fully retracted. The position of the pulley may hence be used to determine whether the cable 102 is sufficiently retracted.

When the cable detector comprises a pulley on which the cable 102 is provided, the second position may correspond to a lower position than the first position. As such, gravity pulling on the pulley will provide a force for moving the pulley from the higher first position to the lower second position. At the second position, a sensor for detecting the pulley may be provided. For example a weight sensor may be used, which may provide a detection signal when the weight of pulley presses on the weight sensor. To at least partially prevent the gravity pulling on the pulley from retracting the cable, a weight compensating mechanism may be provided.

A retraction state of the cable may relate to at least one of the retraction speed of the cable, the tension on the cable, the length of the cable inside the cable storage, and the length of the cable outside the cable storage.

The retraction speed of the cable 102 may be expressed in metres per second, and a retraction speed of zero implies that the cable 102 is not being retracted nor being pulled out of the cable management system 100. The retraction speed may for example be determined from a rotational speed of a wheel or pulley over which the cable 102 runs. A tension of the cable 102 may be measured using conventional cable tension measurement devices.

The controller 120 may be arranged to receive the retraction state signal from the cable detector, and to control the brake release module 118 in according with the retraction state signal. As such, the controller 120 may for example determine when the cable 102 has been retracted sufficiently and deactivate the brake release module 118 to re-activate the brake module 116 such that further retraction of the cable 102 is substantially prevented.

Between detecting that the charging session has come to an end and releasing the brake force on the cable 102, a timer may be implemented arranged to delay the releasing of the brake force after detecting that the charging session has come to an end. The timer may be set to a pre-determined amount of time, which may be for example in the order of seconds, tens of second, minutes, or any other amount of time.

The timer may allow a user some time to already move the plug 103 at the end of the cable 102 from the vehicle towards the cable management system 100 before the cable 102 is being retracted and to place the plug 103 back into the charge plug dock 110. Furthermore, timers or delays may be added between any of the above-mentioned steps.

In embodiments of the method for controlling retraction of a charging cable of a charge cable management system, the detection that the charging session has come to end may be related to the receiving of a user input. For example may the plug 103 be physically locked to vehicle inlet socket 107 of the vehicle 104 during charging, and is some user input required to unlock the plug 103 from the vehicle inlet socket 107. Such a user input may be used for detection at the end of the charging session.

Additionally, or alternatively, a user input may be received related to a desire of the user to start retraction of the cable. Such a desire may be related to the end of a charging session.

In yet another alternative or addition, a user input is required for ending the charging session, such as a payment or authorization from the user that the charging session may be ended.

Any combination of the above-mentioned parameters may be used by the controller 120 to determine that the charging session has ended and that thus the brake release module 118 may be activated.

As an option, the cable management system 100 may comprise a power failure device arranged to deactivate the brake release module 118 in the event of a power failure. As such, when the power supply to the cable management system 100 fails, the brake module 116 is activated and the braking force is applied to the cable 102 to prevent sudden retraction of the cable 102.

The power failure device may be a separate device, or its functionalities may be provided by one or more components of the cable management system 100, more in particular of the brake module 116.

In summary, a system and method are provided for controlling retraction of a charging cable of a charge cable management system for charging an electric vehicle. The retraction is only allowed after certain conditions are met. These conditions correspond to the end of a charging session, and may relate to determining a connection of a plug of a cable used for the charging session with a charge plug dock of the cable management system, determining a release of a plug of a cable used for the charging session from a vehicle inlet socket of the vehicle that was being charged, determining a retraction state of the cable, receiving a user input related to ending the charging session or any combination thereof.

## Claims

1. Charge cable management system for charging an electric vehicle comprising a battery, the system comprising:
- a charging cable;
- a cable storage for housing the cable inside the system;
- a tensioning module for applying a tensioning force on the cable to retract the cable into the cable storage;
- a brake module arranged to apply a brake force on the cable to block retraction of the cable into the cable storage;
- a brake release module arranged to disengage the brake acting on the cable; **characterised in that** it further comprises
- an end-of-charging detection module arranged to determine whether a charging session for charging the battery has come to an end and arranged to provide an end-of-charging signal; and
- a controller arranged to receive said signal, to control the brake release module in accordance with said signal provided by the end-of-charging detection module such that the brake release module is activated to release the brake from the cable when the charging session for charging the battery has come to an end.

2. Charge cable management system according to claim 1, wherein the brake module comprises an urging element for urging the brake module in the engaging position.

3. Charge cable management system according to any of the preceding claims, wherein the controller comprises a timer, which is activated upon receiving the end-of-charging signal provided by the end-of-charging detection module, and wherein the controller is arranged to activate the brake release module to release the brake from the cable after a certain time period.

4. Charge cable management system according to any of the preceding claims, wherein the charging detection module is arranged to:
- receive a user input related to the end of a charging session; and
- provide the end-of-charging detection signal based on the received user input.

5. Charge cable management system according to any of the preceding claims, further comprising a detector for determining a retraction state of the cable and to send a retraction state signal corresponding to the determined retraction state of the cable.

6. Charge cable management system according to claim 5, wherein said retraction state is at least one of the following:
- the retraction speed of the cable;
- the tension on the cable;
- whether the cable is substantially retracted;
- the location of a pulley on which the cable is provided;
- the length of the cable inside the cable storage; and
- the length of the cable outside the cable storage.

7. Charge cable management system according to claim 5 or 6, wherein the controller is arranged to control the brake release module in accordance with the retraction state of the cable.

8. Charge cable management system according to any of the preceding claims, further comprising a power failure device arranged to deactivate the brake release module in the event of a power failure.

9. Charge cable management system according to any of the preceding claims, wherein the tensioning module comprises a pulley on which part of the cable is wound and an urging device for providing a tensioning force on the pulley.

10. Method for controlling retraction of the cable of a charge cable management system for charging an electric vehicle comprising a battery, the method comprising the steps of:
- applying a tensioning force on the cable to retract the cable into the cable storage;
- applying a brake force on the cable during a charging session to prevent retraction of the cable into the cable storage;
**characterised in that** it further comprises the steps of
- determining that the charging session has come to an end;
- generating an end-of-charging signal
- sending an end-of-charging signal to a controller and
- releasing the brake force on the cable when said signal is received, such that the cable is retracted into the cable storage.

11. Method according to claim 10, wherein determining that the charging session has come to an end comprises at least one of:
- determining a connection of a plug of a cable used for the charging session with a charge plug dock of the cable management system;
- determining the release of a plug of a cable used for the charging session from a vehicle inlet socket of the vehicle that was being charged;
- determining the retraction state of the cable;
- receiving a user input related to end-of-charging moment.

12. Method according to claim 11, wherein determining that the charging session has come to an end comprises at least one of:
- determining the release of a plug of the cable from a vehicle inlet socket of the vehicle that was being charged;
- determining a connection of a plug of the cable with a charge plug dock of the cable management system;
- determining that the retraction of the cable is not fully completed.

13. Method according to any of the claims 10-12, wherein determining that the charging session has come to an end activates a timer and after a predetermined time the brake force on the cable is released.
